# EUROPEAN PATENT SPECIFICATION

(11) **EP 2 710 854 B1**
(45) Date of publication and mention of the grant of the patent: **09.09.2015**
(21) Application number: 12726860.5
(22) Date of filing: 17.05.2012
(51) Int. Cl.: H04W 74/08

(54) **Controlling access to a shared channel**
Steuerung des Zugriffs auf einen gemeinsamen Kanal
Commande d'accès à un canal partagé

(30) Priority: 20.05.2011 GB 201108527; 20.05.2011 US 201113112480; 19.01.2012 US 201213353755
(43) Date of publication of application: 26.03.2014
(73) Proprietor: Broadcom Corporation, Irvine, CA 92617 (US)
(72) Inventor: TURTINEN, Samuli, FI-91100 Ii (FI); KOSKELA, Timo, FI-90120 Oulu (FI); HAKOLA, Sami-Jukka, FI-90450 Kempele (FI)
(74) Representative: EIP
(86) International application number: PCT/IB2012/052488
(87) International publication number: WO 2012/160488

(56) References cited:
- WO-A1-02/41590
- WO-A1-2011/053775
- WO-A2-2005/006785
- US-A1- 2004 170 150

## Description

### Field of the Invention

The present invention is in the field of communications and relates primarily, though not exclusively, to wireless communications networks.

### Background of the Invention

With the ever increasing demand for increasing data rates and higher quality services in the world of mobile communications comes ever increasing demand for better performance of cellular network infrastructures. A wide variety of diverse size of cells and connected devices are proposed in addition to traditional macro and microcells. The available frequency resources are limited and need for efficient use of the resources is essential. Recently the need for more efficient usage of radio resources has brought out an idea of co-existence or sharing of systems meaning that systems share operational resources, for example spectrum in a given region.

In addition, the use of unlicensed frequency bands is proposed. License-exempt (LE) or unlicensed frequency bands are parts of frequency spectrum that are only lightly regulated; users do not need licenses to exploit them. Some of main services using LE spectrum are wireless local area networking technologies, such as wireless local area network (WLAN, WiFi), mesh networks, voice over Internet protocol (VoIP) telephony, etc. Typically a synchronized shared channel is used on these frequency bands. The devices wishing to communicate on the shared channel may be configured to measure interference on the channel prior transmission.

WO 2011/053775 discloses a method of accessing a so-called contention access channel by sending to wireless nodes transmissions containing transmit opportunity (TXOP) scheduling information that the wireless nodes can use to determine TXOPs for sending their transmissions. The TXOPs are defined using deterministic backoff, so that each wireless node has a determined slot for communicating in, thereby to avoid conflicts with other wireless nodes' communications.

WO 02/41590 describes another method for communicating on a shared channel.

### Summary of the Invention

According to an aspect of the present invention, there is provided a communications apparatus, comprising: means to communicate on a synchronised shared channel having a frame structure comprising symbols; and means to receive from a network element a given number for each frame or sub frame, characterised by means, during the given number of symbol periods in the beginning of a frame or sub frame, to measure interference and decide based on said measurement(s) whether to transmit or not during the rest of the symbol periods of the frame or sub frame.

According to another aspect of the present invention, there is provided a communications apparatus, comprising: means to control a set of devices, device groups or cells configured to utilise a synchronised shared channel in communication, the channel having a frame structure comprising symbols and during a given number of symbol periods in the beginning of a frame or sub frame to measure interference and make a decision based on said measurement(s) whether to transmit or not during the rest of the symbol periods of the frame or sub frame; and means to select a given number for each frame or sub frame for devices, device groups or cells utilising the same shared channel.

According to yet another aspect of the present invention, there is provided a communications method, comprising: communicating on a synchronised shared channel having a frame structure comprising symbols; and receiving from a network element a given number for each frame or sub frame, characterised by, during the given number of symbol periods in the beginning of a frame or sub frame, measuring interference and making a decision based on said measurement(s) whether to transmit or not during the rest of the symbol periods of the frame or sub frame.

According to still another aspect of the present invention, there is provided a communications method, comprising: controlling a set of devices, device groups or cells configured to utilise a synchronised shared channel in communication, the channel having a frame structure comprising symbols and during a given number of symbol periods in the beginning of a frame or sub frame to measure interference and make a decision based on said measurement(s) whether to transmit or not during the rest of the symbol periods of the frame or sub frame; and selecting a given number for each frame or sub frame for devices, device groups or cells utilising the same shared channel..

According to a still further aspect of the present invention, there is provided a computer program product embodied on a distribution medium readable by a computer and comprising program instructions which, when loaded into an apparatus, execute the methods described above.

Further aspects and embodiments of the present invention will become apparent from the following description and drawings.

### Brief Description of the Drawings

Embodiments of the present invention are described below, by way of example only, with reference to the accompanying drawings, in which
Figure 1 is a diagram that illustrates an example of a communication environment;
Figure 2 is a diagram that illustrates an example of a frame structure of a shared channel;
Figures 3A, 3B and 3C are diagrams illustrating exemplary frame structures;
Figures 4A and 4B are flowcharts illustrating embodiments of the invention; and
Figures 5A and 5B are block diagrams illustrating examples of apparatuses for applying embodiments of the invention..

### Detailed Description of the Invention

Embodiments of the present invention are applicable to any base station, user equipment (UE), server, corresponding component, and/or to any communication system or any combination of different communication systems that support required functionality.

The protocols used, the specifications of communication systems, servers and user terminals, especially in wireless communication, develop rapidly. Such development may require extra changes to an embodiment. Therefore, all words and expressions should be interpreted broadly and they are intended to illustrate, not to restrict, embodiments.

Many different radio protocols to be used in communications systems exist. Some examples of different communication systems are the universal mobile telecommunications system (UMTS) radio access network (UTRAN or E-UTRAN), long term evolution (LTE, known also as E-UTRA), long term evolution advanced (LTE-A), Wireless Local Area Network (WLAN) based on IEEE 802.11 stardard, worldwide interoperability for microwave access (WiMAX), Bluetooth®, personal communications services (PCS) and systems using ultra-wideband (UWB) technology. IEEE refers to the Institute of Electrical and Electronics Engineers. Embodiments of the invention may be applied in at least the foregoing kinds of communications systems.

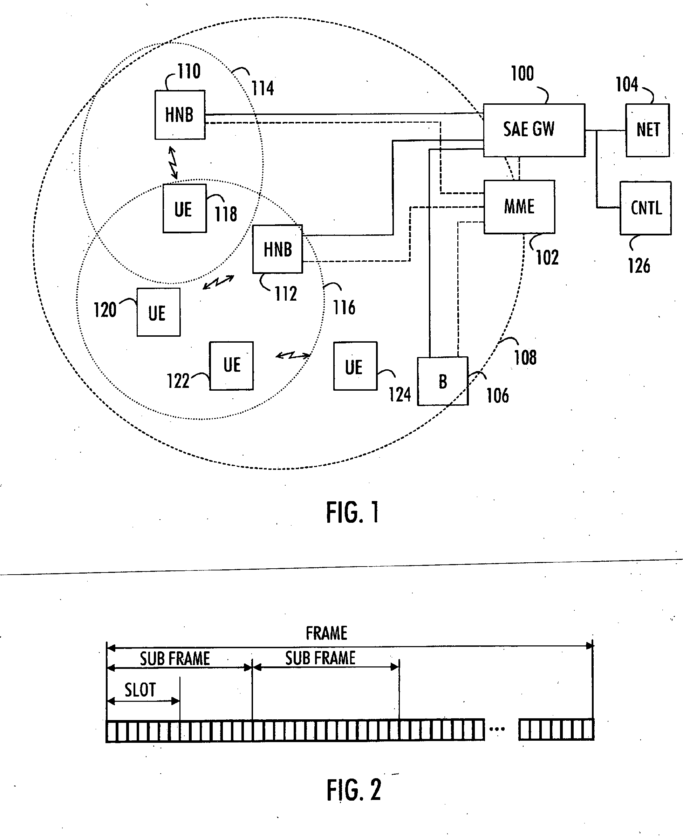

Figure 1 illustrates a simplified view of a communications environment only showing some elements and functional entities, all being logical units whose implementation may differ from what is shown. The connections shown in Figure 1 are logical connections; the actual physical connections may be different. It is apparent to a person skilled in the art that the systems also comprise other functions and structures. It should be appreciated that the functions, structures, elements and the protocols used in or for communication are irrelevant to the actual invention. Therefore, they need not to be discussed in more detail here.

In the example of Figure 1, a radio system based on LTE/SAE (Long Term Evolution/System Architecture Evolution) network elements is shown. However, the embodiments described in these examples are not limited to the LTE/SAE radio systems but can also be implemented in other radio systems, such as systems utilizing Wireless Local Area Network (WLAN).

The simplified example of a network of Figure 1 comprises a SAE Gateway 100 and a Mobility Management Entity (MME) 102. The SAE Gateway 100 provides a connection to the Internet 104. Figure 1 illustrates an Enhanced node B (eNodeB) 106 serving a macro cell 108. In addition, two local area base stations or Home NodeBs (HNB) 110 and HNB 112 with corresponding coverage areas 114,116 are shown. In this example, the HNBs 110, 112 and the eNodeB 106 are connected to the SAE Gateway 100 and the MME 102.

The HNBs may be privately purchased and owned. For example, the owner of the HNB 110 may form a user group of the UEs which are allowed to access the HNB 110. Such a group may be called a closed subscriber group CSG. Typically, only the members of the CSG of a HNB are allowed to contact the HNB. In an embodiment, more than one HNB form a CSG Network. For example, one home may be covered by more than one HNB sharing the same CSG. The owner of the HNB 110 may activate and deactivate the HNB on demand. If a HNB is open for all users it comprises an Open subscriber group OSG.

In the example of Figure 1, user equipment UE 118 is camped on the HNB 110. The UE 120 is camped on the HNB 112.

In an embodiment, UE of a communication system support direct device-to-device communications (between two terminal devices) or communication within a cluster of terminal devices. Figure 1 illustrates an example where the UEs 122, 124 are communicating device-to-device (D2D).

The eNodeBs of a communication system may host the functions for Radio Resource Management: Radio Bearer Control, Radio Admission Control, Connection Mobility Control, Dynamic Resource Allocation (scheduling). The MME 102 is responsible for the overall UE control in mobility, session/call and state management with assistance of the eNodeBs through which the UEs connect to the network. The SAE GW 100 is an entity configured to act as a gateway between the network and other parts of communication network such as the Internet for example. The SAE GW may be a combination of two gateways, a serving gateway (S-GW) and a packet data network gateway (P-GW).

To be clear, UE refers to a portable computing device. Such computing devices include wireless mobile communication devices operating with or without a subscriber identification module (SIM), including, but not limited to, the following types of devices: mobile phone, smartphone, personal digital assistant (PDA), handset, laptop computer.

In an embodiment, at least some of the above connections between NodeBs and UEs and D2D connections utilise same shared communication resources. The resource may be a shared channel on which communication is synchronised.

In an embodiment, channel contention between the devices communicating on a shared channel is used to reduce interference. The contention may require measuring the usage of the channel before making the decision on whether to transmit on the channel or not. A non-limiting example of channel contention is carrier sensing according to a carrier-sensing multiple access (CSMA) based protocol.

In LTE based systems, there is already a variety of proposed solutions to measure unknown interference from a shared channel but in many cases these methods do not consider the interference caused by nearby other LTE type systems utilizing, for example, the same synchronization information and frame structure as well as similar resource sharing and co-existence methods. This kind of situation may occur when there are two nearby HNBs applying CSG and a few UE devices connected to them. One of the UEs may be connected to one CSG but closer to another, since it is not allowed to connect to the closer cell. The UE may then cause very disturbed interference to uplink transmissions of other cells, for example, due to relatively high transmission power, as well as suffer from poor downlink link quality itself.

In the example of Figure 1, the UE 118 communicating with HNB 110 may physically be nearer to the HNB 112. However, if the subscriber group of the HNB 112 is closed, the UE 118 may not communicate with it. The transmission of UE 118 may interfere with the communication of UE 120 and the HNB 112.

Figure 2 illustrates an example of a frame structure of a shared channel of an embodiment. A frame comprises a given number of sub frames. Each sub frame comprises two slots with seven symbol periods per slot. The example is based on LTE type frame but embodiments are not limited to any particular type of frame structure.

In the example radio system of Figure 1, the devices may be configured to utilize the shared channel of Figure 2 in the communication. Transmissions on the channel are synchronized. During a given number of symbol periods in the beginning of a sub frame allocated to the device it is configured to measure interference. On the basis of the measurement the device is configured to make a decision whether to transmit or not during the rest of the symbol periods of the sub frame. The details of the decision making are not relevant regarding embodiments of the invention.

In an embodiment, the radio system comprises an apparatus configured to control the cells and devices which utilise a synchronised shared channel in communication. The apparatus may be an eNodeB serving a macro cell, such as the eNodeB 106. The apparatus may be a network element in the radio system. It may be realized as a separate network element 126 or embedded in one or more other network elements. In addition, the apparatus may be a HNB controlling a set of surrounding HNBs. If the apparatus is a network element other than a NodeB, control information generated by the network element may be transmitted to the UEs via the NodeB each UE is connected to.

In an embodiment, the apparatus is configured to select the given number for each frame or sub frame for each cell, device or device group utilising the same shared channel. The given number may be different for different cells or subscriber groups utilising the same shared channel. As the number of symbols used for measuring and decision making is different, the symbol count left in each frame for transmitting data is different. The given number or symbol count may be configured for cells on a sub frame or a frame basis so that the amount of transmitted symbols in one sub frame or frame is different in every cell or subscriber group.

In an embodiment, the apparatus determines the number of symbol periods to be used for measurement and decision making purposes for a predetermined number of successive frames or sub frames. For example, if a frame comprises a given number of sub frames, the information regarding the number of symbol periods to be used for measurement and decision making purposes may be determined for the whole frame and sent to the cells and devices in question.

The number of symbol periods to be used for measurement and decision making purposes may be constant for a given number of successive frames or sub frames.

In the example of Figure 1, it is assumed that UEs 118, 120, 122 and 124 all utilise the same shared channel when communicating. It is also assumed that eNodeB 106 selects a given number for the UEs communicating within the coverage area of the eNodeB. Thus, the eNodeB 106 is configured to select the given number for the UEs in the cell served by HNB 110 (i.e. UE 118), the given number for the UEs in the cell served by HNB 112 (i.e. UE 120), and for UE transmitting D2D (i.e. UEs 122, 124), wherein all given numbers are different.

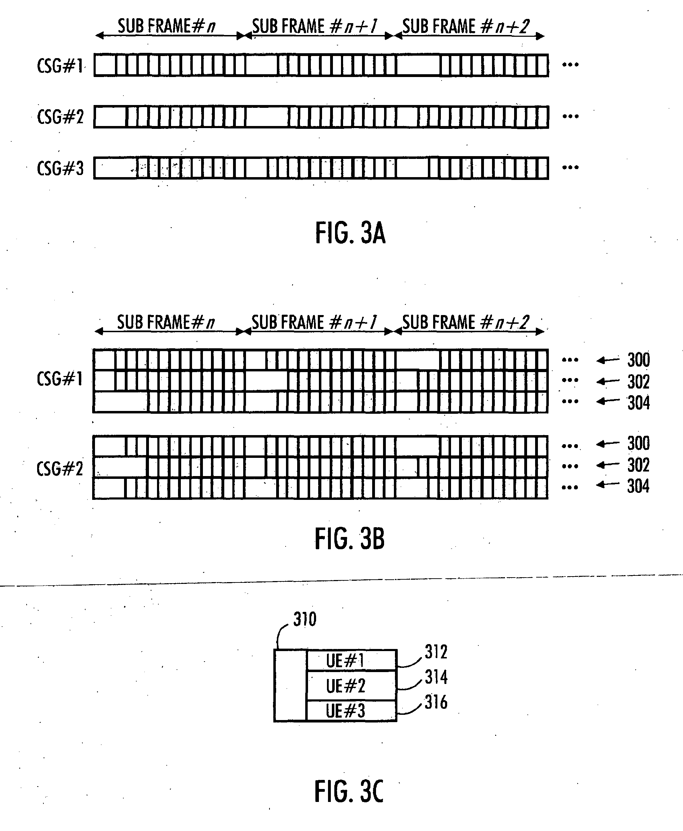

Figure 3A illustrates, by way of example, three successive sub frames *n*, *n*+*1* and *n*+*2* for devices of three different cells or a subscriber group CSG#1, CSG#2, CSG#3. At the beginning of each sub frame a device is expected to conduct interference measurements of possible nearby transmissions and, based on that information, decide whether to transmit or not. Each cell or group has been given a different time period in terms of symbols for the measurement and decision making.

In the first sub frame, *n*, a device of the CSG#1 is configured to perform measurement and decision making during two first symbol periods. A device of the CSG#2 is configured to perform measurement and decision making during three first symbol periods and a device of the CSG#3 is configured to perform measurement and decision making during four first symbol periods. In this example, assuming that there is no additional interference present, the device of the CSG#1 does not detect any interference at the beginning of the first sub frame and it may decide to start transmission during the rest of the symbol periods of the sub frame. The devices of the CSG#2 and the CSG#3 may, however, detect the transmission of the CSG#1 device and decide not to transmit.

In the second sub frame *n+1,* a device of the CSG#1 uses three symbol periods, a device of the CSG#2 uses four symbol periods and a device of the CSG#3 uses two symbol periods for performing measurement and decision making.

In the third sub frame *n*+*2*, a device of the CSG#1 uses four symbol periods, a device of the CSG#2 uses two symbol periods and a device of the CSG#3 uses three symbol periods for performing measurement and decision making.

As each cell has a separate amount of symbols to be transmitted in a sub frame, other cells or devices may sense the transmissions of devices which have transmissions earlier for possible interference issues. As illustrated in Figure 3A, symbol count hopping patterns may be configured for different cells so that they have same amount of effective resources on average over time.

In an embodiment, the apparatus selecting the given number or symbol count for each frame or sub frame for each cell or device or subscriber groups utilising the same shared channel utilizes various information when making the selections. For example, geo-location information of devices in the cells and/or path loss measurements between the cells may be taken into account. If given cells are far away from each other or the path loss between the cells is large, a same symbol count hopping pattern may be applied in both cells. If cells are near each other and/or the path loss is low, the hopping patterns should typically be different.

Moreover, the apparatus may configure different unequal hopping patterns for different cells based on respective traffic needs and relative Quality of Service (QoS) requirements of the cells. A cell with a high traffic load may be given shorter time periods for measurement and decision making while a cell with low traffic load may be given longer time periods. A cell with a shorter time period is more likely to obtain the channel than a cell with a longer time period. In addition, the apparatus may give grant one cell the use of a whole sub frame for transmission without any requirement to sense the channel beforehand.

In an embodiment, the time period or symbol count hopping patterns are different for different transmission directions (uplink/downlink).

In an embodiment, multiple time period or symbol count hopping patterns are configured for a single cell separated in frequency domain to provide simultaneous support for different type of traffic. For example, strongly time-critical traffic may be provided resources more frequently than less critical traffic. The bandwidth of one pattern should be wide enough for feasible measurement accuracy in the devices. Moreover, the bandwidth of one hopping pattern may be wider for shorter sensing period and narrower for longer sensing period.

Figure 3B illustrates three successive sub frames *n*, *n*+*1* and *n*+*2* of a shared channel for devices of two different cells or subscriber groups CSG#1 and CSG#2. In the vertical direction hopping patterns for three different frequencies 300, 302, 304 are shown for subscriber group CSG#1 and for subscriber group CSG#2. Here, in the first sub frame a device from group CSG#1 utilizing frequency 300 would have a shorter time period for measurement and decision making purposes than a device from group CSG#1.

It should be noted that one device may utilize only one sensing period at a time in a frequency channel since, from a transceiver point of view, it would be problematic to transmit and receive at the same time in a same channel. This kind of approach could be effectively utilized for uplink traffic of a femto cell having multiple UE devices connected to it, for example. Additionally, if a cell needs to allocate the whole bandwidth to a certain UE device or certain frequency resources having multiple different sensing periods, the longest sensing period at issue could be enforced within a corresponding sub frame.

Figure 3C illustrates another embodiment which may be applied in a HNB. Here the HNB performs measurement and decision making in symbol periods 310 and, if it decides to transmit, it may transmit in the rest of the symbol periods of the sub frame to different UEs, where the transmissions to different UEs are separated in frequency 312, 314, 316. The frequency bands allocated to each UE transmission may be of different size.

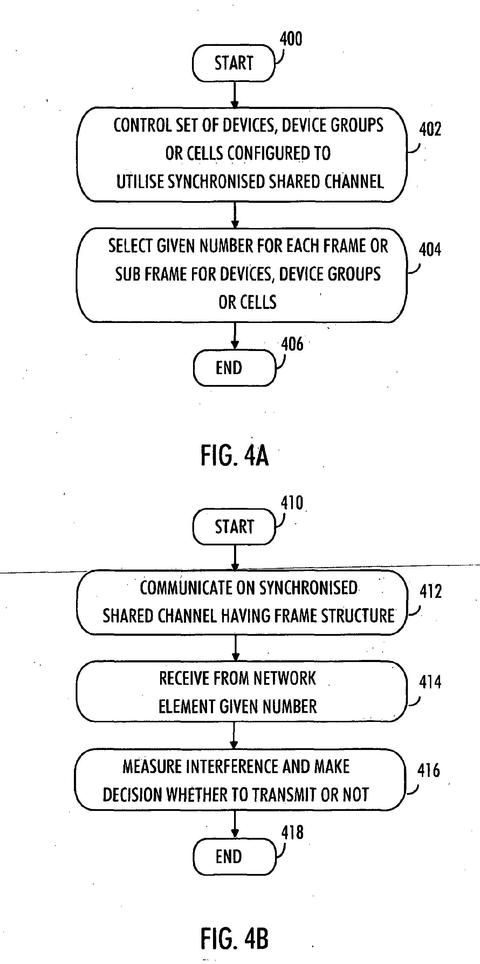

Figure 4A is a flowchart illustrating an embodiment of the invention. The embodiment starts at step 400.

In step 402, a network element is configured to control a set of devices, device groups or cells configured to utilise a synchronised shared channel in communication. The channel has a frame structure comprising symbols and during a given number of symbol periods in the beginning of a frame or sub frame the devices in the device groups and cells are configured to measure interference and make a decision whether to transmit or not during the rest of the symbol periods of the frame or sub frame.

In step 404, a network element is configured to select a given number for each frame or sub frame for devices, device groups or cells utilising the same shared channel. The selection may be based on path loss measurement information related to the devices, device groups or cells. The selection may be based on QoS information related to the devices, device groups or cells or the transmission capacity required by the devices, device groups or cells. The given time periods may be selected for devices, device groups or cells for both transmission directions. A different given number may be selected for different devices, device groups or cells utilising the same shared channel. This ensures that cells or devices may sense the transmissions of devices which have transmissions earlier for possible interference issues.

The process ends in step 406.

Figure 4B is a flowchart illustrating another embodiment of the invention. The embodiment starts at step 410.

In step 412, an apparatus configured to communicate on a synchronised shared channel having a frame structure comprising symbols.

In step 414, an apparatus receives from a network element a given number for each frame or sub frame.

In step 416, the apparatus is configured during a given number of symbol periods in the beginning of a frame or sub frame to measure interference and make a decision whether to transmit or not during the rest of the symbol periods of the frame or sub frame.

The process ends in step 418.

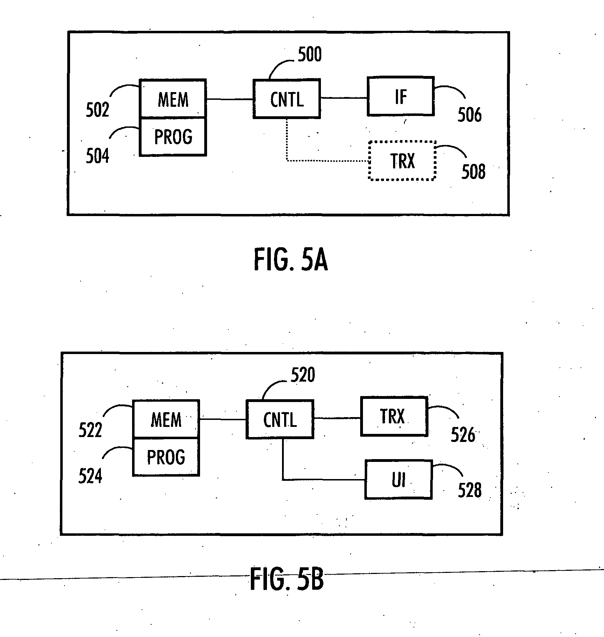

Figure 5A illustrates an embodiment. The figure illustrates a simplified example of an apparatus applying embodiments of the invention. For example, the apparatus may be an eNodeB of a communications system. In an embodiment, it is a separate network element.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus of the example includes a control circuitry 500 configured to control at least part of the operation of the apparatus.

The apparatus comprises a memory 502 for storing data. Furthermore the memory stores software 504 executable by the control circuitry 500. The memory is integrated in the control circuitry.

The software 504 comprises a computer program comprising program code means adapted to cause the control circuitry 500 of the apparatus to control a set of devices, device groups or cells configured to utilise a synchronised shared channel in communication, the channel having a frame structure comprising symbols and during a given number of symbol periods in the beginning of a frame or sub frame to measure interference and make a decision whether to transmit or not during the rest of the symbol periods of the frame or sub frame; and select a given number for each frame or sub frame for devices, device groups or cells utilising the same shared channel, as described above.

The apparatus further comprises interface circuitry 506 configured to connect the apparatus to other devices and network elements of communication system, for example to core. The interface provides a wired or wireless connection to the communication network. The apparatus is in connection with core network elements, eNodeBs, HNBs and with other respective apparatuses of communication systems.

The apparatus further comprises a transceiver 508 configured to communicate with user equipment in the service area of the apparatus. The transceiver is operationally connected to the control circuitry 500. It may be connected to an antenna arrangement (not shown). This applies especially if the apparatus is an eNodeB.

Figure 5B illustrates another embodiment by way of a simplified example of an apparatus, which may be UE or a HNB of a communications system.

It should be understood that the apparatus is depicted herein as an example illustrating some embodiments. It is apparent to a person skilled in the art that the apparatus may also comprise other functions and/or structures and not all described functions and structures are required. Although the apparatus has been depicted as one entity, different modules and memory may be implemented in one or more physical or logical entities.

The apparatus of the example includes a control circuitry 520 configured to control at least part of the operation of the apparatus.

The apparatus comprises a memory 522 for storing data. Furthermore the memory stores software 524 executable by the control circuitry 520. The memory is integrated in the control circuitry. The software comprises a computer program comprising program code means adapted to cause the control circuitry 520 of the apparatus control the apparatus to communicate on a synchronised shared channel having a frame structure comprising symbols; during a given number of symbol periods in the beginning of a frame or sub frame measure interference and make a decision whether to transmit or not during the rest of the symbol periods of the frame or sub frame; and receive from a network element the given number for each frame or sub frame.

The apparatus further comprises interface circuitry 526 configured to connect the apparatus to other devices and network elements of communication system, for example to core. The interface provides a wired or wireless connection to the communication network. The apparatus is in connection with core network elements, eNodeBs, HNBs and with other respective apparatuses of communication systems.

The apparatus further comprises a transceiver 528 configured to communicate with user equipment in the service area of the apparatus. The transceiver is operationally connected to the control circuitry 520. It may be connected to an antenna arrangement (not shown).

The apparatus further comprises user interface 528 operationally connected to the control circuitry 520. The user interface typically comprises a display, a keyboard or keypad, a microphone and a speaker, for example.

The steps and related functions described in the above and attached figures are in no absolute chronological order, and some of the steps may be performed simultaneously or in an order differing from the given one. Other functions can also be executed between the steps or within the steps. Some of the steps can also be left out or replaced with a corresponding step.

The apparatuses or controllers able to perform the above-described steps may be implemented as an electronic digital computer, which may comprise a working memory (RAM), a central processing unit (CPU), and a system clock. The CPU may comprise a set of registers, an arithmetic logic unit, and a controller. The controller is controlled by a sequence of program instructions transferred to the CPU from the RAM. The controller may contain a number of microinstructions for basic operations. The implementation of microinstructions may vary depending on the CPU design. The program instructions may be coded by a programming language, which may be a high-level programming language, such as C, Java, etc., or a low-level programming language, such as a machine language, or an assembler. The electronic digital computer may also have an operating system, which may provide system services to a computer program written with the program instructions.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware. The term 'circuitry' would also cover, for example and if applicable to the particular element, a baseband integrated circuit or applications processor integrated circuit for a mobile phone or a similar integrated circuit in a server, a cellular network device, or another network device.

An embodiment provides a computer program embodied on a distribution medium, comprising program instructions which, when loaded into an electronic apparatus, are configured to control the apparatus to execute the embodiments described above.

The computer program may be in source code form, object code form, or in some intermediate form, and it may be stored in some sort of carrier, which may be any entity or device capable of carrying the program. Such carriers include a record medium, computer memory, read-only memory, and a software distribution package, for example. Depending on the processing power needed, the computer program may be executed in a single electronic digital computer or it may be distributed amongst a number of computers.

The apparatus may also be implemented as one or more integrated circuits, such as application-specific integrated circuits ASIC. Other hardware embodiments are also feasible, such as a circuit built of separate logic components. A hybrid of these different implementations is also feasible. When selecting the method of implementation, a person skilled in the art will consider the requirements set for the size and power consumption of the apparatus, the necessary processing capacity, production costs, and production volumes, for example.

In an embodiment, the apparatus comprises means for communicating on a synchronised shared channel having a frame structure comprising symbols; means for receiving from a network element a given number for each frame or sub frame, and means for during the given number of symbol periods in the beginning of a frame or sub frame measuring interference and making a decision whether to transmit or not during the rest of the symbol periods of the frame or sub frame.

In an embodiment, the apparatus comprises means for controlling a set of devices, device groups or cells configured to utilise a synchronised shared channel in communication, the channel having a frame structure comprising symbols and during a given number of symbol periods in the beginning of a frame or sub frame to measure interference and make a decision whether to transmit or not during the rest of the symbol periods of the frame or sub frame; and means for selecting a given number for each frame or sub frame for devices, device groups or cells utilising the same shared channel.

The skilled person will appreciate that, as technology advances, the inventive concepts explained hereinabove can be implemented in various ways. Aspects of the invention and its embodiments are not limited to the examples described above.

## Claims

1. A communications apparatus (118), comprising:
means to communicate (528) on a synchronised shared channel having a frame structure comprising symbols; and
means to receive (528) from a network element a given number for each frame or sub frame,
means, during the given number of symbol periods in the beginning of a frame or sub frame, to measure (524) interference and decide based on said measurement whether to transmit or not during the rest of the symbol periods of the frame or sub frame.

2. The apparatus (118) of claim 1, comprising means to receive (528) from a network element a given number for a predetermined number of successive frames or sub frames.

3. The apparatus (118) of claim 1, comprising:
means to communicate (528) on a shared channel having a frame structure comprising a predetermined number of sub frames within each frame; and
means to receive (528) from a network element a given number for each sub frame of the frame.

4. The apparatus (118) of claim 1, comprising means to receive (528) from a network element given numbers for different transmission directions.

5. A communications apparatus (106), comprising:
means (504) to control a set of devices (118, 120, 122), device groups or cells configured to utilise a synchronised shared channel in communication, the channel having a frame structure comprising symbols and during a given number of symbol periods in the beginning of a frame or sub frame to measure interference and make a decision based on said measurement whether to transmit or not during the rest of the symbol periods of the frame or sub frame; and
means (504) to select a given number for each frame or sub frame for devices, device groups or cells utilising the same shared channel.

6. The apparatus (106) of claim 5, comprising means to select (504) the given number for a predetermined number of successive frames or sub frames for devices, device groups or cells utilising the same shared channel.

7. The apparatus (106) of claim 5, the apparatus being configured to select the given time period for devices, device groups or cells on the basis of the location information related to the devices (118, 120, 122), device groups or cells.

8. The apparatus 106 of claim 5, comprising means to select (504) the given time period for devices, device groups or cells on the basis of path loss measurement information related to the devices (118, 120, 122), device groups or cells.

9. The apparatus (106) of claim 5, comprising means to select (504) the given time period for devices (118, 120, 122), device groups or cells on the basis of the quality of service information related to the devices, device groups or cells or the transmission capacity required by the devices, device groups or cells.

10. The apparatus (106) of claim 5, comprising means to select (504) the given time periods for devices (118, 120, 122), device groups or cells for both transmission directions.

11. The apparatus of claim 5, comprising means to select (504) a different given number for different devices (118, 120, 122), device groups or cells utilising the same shared channel.

12. A communications method, comprising:
communicating (412) on a synchronised shared channel having a frame structure comprising symbols; and
receiving (414) from a network element a given number for each frame or sub frame,
during the given number of symbol periods in the beginning of a frame or sub frame, measuring (416) interference and making a decision based on said measurement whether to transmit or not during the rest of the symbol periods of the frame or sub frame.

13. The method of claim 12, further comprising:
receiving (414) from a network element a given number for a predetermined number of successive frames or sub frames.

14. The method of claim 12, further comprising:
communicating (412) on a shared channel having a frame structure comprising a predetermined number of sub frames within each frame; and
receiving (414) from a network element a given number for each sub frame of the frame.

15. The method of claim 12, further comprising:
receiving (414) from a network element given numbers for different transmission directions.

16. A communications method, comprising:
controlling (402) a set of devices, device groups or cells configured to utilise a synchronised shared channel in communication, the channel having a frame structure comprising symbols and during a given number of symbol periods in the beginning of a frame or sub frame to measure interference and make a decision based on said measurement whether to transmit or not during the rest of the symbol periods of the frame or sub frame; and
selecting (404) a given number for each frame or sub frame for devices, device groups or cells utilising the same shared channel.

17. The method of claim 16, further comprising:
selecting (404) the given number for a predetermined number of successive frames or sub frames for devices (118, 120, 122), device groups or cells utilising the same shared channel.

18. The method of claim 16, further comprising:
selecting (404) the given time period for devices, device groups or cells on the basis of the location information related to the devices (118, 120, 122), device groups or cells.

19. The method of claim 16, further comprising:
selecting (404) the given time period for devices, device groups or cells on the basis of path loss measurement information related to the devices (118, 120, 122), device groups or cells.

20. The method of claim 16, further comprising:
selecting (404) the given time period for devices, device groups or cells on the basis of the quality of service information related to the devices (118, 120, 122), device groups or cells or the transmission capacity required by the devices, device groups or cells.

21. The method of claim 16, further comprising:
selecting (404) the given time periods for devices (118, 120, 122), device groups or cells for both transmission directions.

22. A computer program product embodied on a distribution medium readable by a computer and comprising program instructions which, when loaded into an apparatus, execute the method according to any of claims 12 to 21.

## Patentansprüche

1. Kommunikationsvorrichtung (118), mit
einer Einrichtung zur Kommunikation (528) auf einem synchronisierten gemeinsam genutzten Kanal mit einer Frame-Struktur mit Symbolen,
einer Einrichtung zum Empfang (528) einer gegebenen Anzahl für jedes Frame oder Unter-Frame von einem Netzwerkelement, und
einer Einrichtung zur Messung (524), während der gegebenen Anzahl von Symbolperioden zu Beginn eines Frames oder Unter-Frames, einer Interferenz, und zur Entscheidung, basierend auf der Messung, ob während des Rests der Symbolperioden des Frames oder des Unter-Frames zu übertragen ist oder nicht.

2. Vorrichtung (118) nach Anspruch 1, ferner mit einer Einrichtung zum Empfang (528) einer gegebenen Anzahl für eine vorbestimmte Anzahl von aufeinanderfolgenden Frames oder Unter-Frames von einem Netzwerkelement.

3. Vorrichtung (118) nach Anspruch 1, ferner mit
einer Einrichtung zur Kommunikation (528) auf einem gemeinsam genutzten Kanal mit einer Frame-Struktur mit einer vorbestimmten Anzahl von Unter-Frames innerhalb eines jeden Frames, und
einer Einrichtung zum Empfang (528) einer gegebenen Anzahl für jedes Unter-Frame des Frames von einem Netzwerkelement.

4. Vorrichtung (118) nach Anspruch 1, ferner mit einer Einrichtung zum Empfang (528) gegebene Anzahlen für unterschiedliche Übertragungsrichtungen von einem Netzwerkelement.

5. Kommunikationsvorrichtung (106), mit
einer Einrichtung zur Steuerung (504) eines Satzes von Geräten (118, 120, 122), Gerätegruppen oder Zellen, die dazu eingerichtet sind, um einen synchronisierten gemeinsam genutzten Kanal bei einer Kommunikation zu verwenden, wobei der Kanal eine Frame-Struktur mit Symbolen aufweist, und um, während einer gegebenen Anzahl von Symbolperioden zu Beginn eines Frames oder Unter-Frames, eine Interferenz zu messen und basierend auf der Messung zu entscheiden, ob während des Rests der Symbolperioden des Frames oder Unter-Frames zu übertragen ist oder nicht, und
einer Einrichtung zur Auswahl (504) einer gegebenen Anzahl für jedes Frame oder Unter-Frame für Geräte, Gerätegruppen oder Zellen, die den gleichen gemeinsam genutzten Kanal verwenden.

6. Vorrichtung (106) nach Anspruch 5, ferner mit einer Einrichtung zur Auswahl (504) der gegebenen Anzahl für eine vorbestimmte Anzahl von aufeinanderfolgenden Frames oder Unter-Frames für Geräte, Gerätegruppen oder Zellen, die den gleichen gemeinsam genutzten Kanal verwenden.

7. Vorrichtung (106) nach Anspruch 5, wobei die Vorrichtung (106) dazu eingerichtet ist, um die gegebene Zeitperiode für Geräte, Gerätegruppen oder Zellen basierend auf den auf die Geräte (118, 120, 122), Gerätegruppen oder Zellen bezogenen Lageinformationen auszuwählen.

8. Vorrichtung (106) nach Anspruch 5, ferner mit einer Einrichtung zur Auswahl (504) der gegebenen Zeitperiode für Geräte, Gerätegruppen oder Zellen basierend auf auf die Geräte (118, 120, 122), Gerätegruppen oder Zellen bezogenen Pfadverlustmessungsinformationen.

9. Vorrichtung (106) nach Anspruch 5, ferner mit einer Einrichtung zur Auswahl (504) der gegebenen Zeitperiode für Geräte (118, 120, 122), Gerätegruppen oder Zellen basierend auf den auf die Geräte, Gerätegruppen oder Zellen bezogenen Dienstqualitätsinformationen oder auf der von den Geräten, Gerätegruppen oder Zellen benötigten Übertragungskapazität.

10. Vorrichtung (106) nach Anspruch 5, ferner mit einer Einrichtung zur Auswahl (504) der gegebenen Zeitperioden für Geräte (118, 120, 122), Gerätegruppen oder Zellen für beide Übertragungsrichtungen.

11. Vorrichtung nach Anspruch 5, ferner mit einer Einrichtung zur Auswahl (504) einer unterschiedlichen gegebenen Anzahl für unterschiedliche Geräte (118, 120, 122), Gerätegruppen oder Zellen, die den gleichen gemeinsam genutzten Kanal verwenden.

12. Kommunikationsverfahren, mit
einem Kommunizieren (412) auf einem synchronisierten gemeinsam genutzten Kanal mit einer Frame-Struktur mit Symbolen,
einem Empfangen (114) einer gegebenen Anzahl für jedes Frame oder Unter-Frame von einem Netzwerkelement, und
einem Messen (416), während der gegebenen Anzahl von Symbolperioden zu Beginn eines Frames oder Unter-Frames, einer Interferenz, und einem Entscheiden, basierend auf der Messung, ob während des Rests der Symbolperioden des Frames oder des Unter-Frames zu übertragen ist oder nicht.

13. Verfahren nach Anspruch 12, ferner mit
einem Empfangen (414) einer gegebenen Anzahl für eine vorbestimmte Anzahl von aufeinanderfolgenden Frames oder Unter-Frames von einem Netzwerkelement.

14. Verfahren nach Anspruch 12, ferner mit
einem Kommunizieren (412) auf einem gemeinsam genutzten Kanal mit einer Frame-Struktur mit einer vorbestimmten Anzahl von Unter-Frames innerhalb eines jeden Frames, und
einem Empfangen (414) einer gegebenen Anzahl für jedes Unter-Frame des Frames von einem Netzwerkelement.

15. Verfahren nach Anspruch 12, ferner mit
einem Empfangen (414) von gegebenen Anzahlen für unterschiedliche Übertragungsrichtungen von einem Netzwerkelement.

16. Kommunikationsverfahren, mit
einem Steuern (402) eines Satzes von Geräten, Gerätegruppen oder Zellen, die dazu eingerichtet sind, um einen synchronisierten gemeinsam genutzten Kanal bei einer Kommunikation zu verwenden, wobei der Kanal eine Frame-Struktur mit Symbolen aufweist, und einem Messen einer Interferenz während einer gegebenen Anzahl von Symbolperioden zu Beginn eines Frames oder Unter-Frames, und einem Entscheiden, basierend auf der Messung, ob während des Rests der Symbolperioden des Frames oder Unter-Frames zu übertragen ist oder nicht, und
einem Auswählen (404) einer gegebenen Anzahl für jedes Frame oder Unter-Frame für Geräte, Gerätegruppen oder Zellen, die den gleichen gemeinsam genutzten Kanal verwenden.

17. Verfahren nach Anspruch 16, ferner mit
einem Auswählen (404) der gegebenen Anzahl für eine vorbestimmte Anzahl von aufeinanderfolgenden Frames oder Unter-Frames für Geräte (118, 120, 122), Gerätegruppen oder Zellen, die den gleichen gemeinsam genutzten Kanal verwenden.

18. Verfahren nach Anspruch 16, ferner mit
einem Auswählen (404) der gegebenen Zeitperiode für Geräte, Gerätegruppen oder Zellen basierend auf den auf die Geräte (118, 120, 122), Gerätegruppen oder Zellen bezogenen Lageinformationen.

19. Verfahren nach Anspruch 16, ferner mit
einem Auswählen (404) der gegebenen Zeitperiode für Geräte, Gerätegruppen oder Zellen basierend auf auf die Geräte (118, 120, 122), Gerätegruppen oder Zellen bezogenen Pfadverlustmessungsinformationen.

20. Verfahren nach Anspruch 16, ferner mit
einem Auswählen (404) der gegebenen Zeitperiode für Geräte, Gerätegruppen oder Zellen basierend auf den auf die Geräte (118, 120, 122), Gerätegruppen oder Zellen bezogenen Dienstqualitätsinformationen oder auf der von den Geräten, Gerätegruppen oder Zellen benötigten Übertragungskapazität.

21. Verfahren nach Anspruch 16, ferner mit
einem Auswählen (404) der gegebenen Zeitperioden für Geräte (118, 120, 122), Gerätegruppen oder Zellen für beide Übertragungsrichtungen.

22. Computerprogrammprodukt, das auf einem Verteilungsmedium verkörpert ist, das durch einen Computer lesbar ist und Programmanweisungen aufweist, die, wenn in eine Vorrichtung geladen, das Verfahren nach einem der Ansprüche 12 bis 21 ausführen.

## Revendications

1. Un appareil de communication (118), comprenant :
des moyens pour communiquer (528) sur un canal partagé synchronisé ayant une structure de trames comprenant des symboles, et
des moyens pour recevoir (528) en provenance d'un élément de réseau un nombre donné pour chaque trame ou sous-trame,
des moyens pour mesurer (524), durant le nombre donné de périodes de symbole au début d'une trame ou d'une sous-trame, une interférence et prendre une décision d'émettre ou non durant le reste des périodes de symbole de la trame ou sous-trame sur la base de ladite mesure (s).

2. Appareil (118) selon la revendication 1, comprenant des moyens pour recevoir (528) en provenance d'un élément de réseau un nombre donné pour un nombre prédéterminé de trames ou sous-trames successives.

3. Appareil (118) selon la revendication 1, comprenant :
des moyens pour communiquer (528) sur un canal partagé ayant une structure de trames comprenant un nombre prédéterminé de sous-trames à l'intérieur de chaque trame, et
des moyens pour recevoir (528) en provenance d'un élément de réseau un nombre donné pour chaque sous-trame de la trame.

4. Appareil (118) selon la revendication 1, comprenant des moyens pour recevoir (528) en provenance d'un élément de réseau des nombres donnés pour différentes directions de transmission.

5. Appareil de communication (106) comprenant :
des moyens (504) pour commander un ensemble de dispositifs (118, 120, 122), groupes de dispositifs ou cellules configurés pour utiliser un canal partagé synchronisé en communication, le canal ayant une structure de trames comprenant des symboles, et pour mesurer, durant un nombre donné de périodes de symbole au début d'une trame ou sous-trame, une interférence et prendre une décision d'émettre ou non durant le reste des périodes de symbole de la trame ou sous-trame sur la base de ladite mesure, et
des moyens (504) pour sélectionner un nombre donné pour chaque trame ou sous-trame pour des dispositifs, groupes de dispositifs ou cellules utilisant le même canal partagé.

6. Appareil (106) selon la revendication 5, comprenant des moyens pour sélectionner (504) le nombre donné pour un nombre prédéterminé de trames ou sous-trames successives pour des dispositifs, groupes de dispositifs ou cellules utilisant le même canal partagé.

7. Appareil (106) selon la revendication 5, l'appareil étant configuré pour sélectionner la période de temps donnée pour des dispositifs, groupes de dispositifs ou cellules sur la base de l'information de localisation concernant les dispositifs (118, 120, 122), groupes de dispositifs ou cellules.

8. Appareil (106) selon la revendication 5, comprenant des moyens pour sélectionner (504) la période de temps donnée pour des dispositifs, groupes de dispositifs ou cellules sur la base de l'information de mesure de l'affaiblissement de trajet concernant les dispositifs (118, 120, 122), groupes de dispositifs ou cellules.

9. Appareil (106) selon la revendication 5, comprenant des moyens pour sélectionner (504) la période de temps donnée pour des dispositifs (118, 120, 122), groupes de dispositifs ou cellules sur la base de l'information relative à la qualité de service concernant les dispositifs, groupes de dispositifs ou cellules ou la capacité de transmission requise par les dispositifs, groupes de dispositifs ou cellules.

10. Appareil (106) selon la revendication 5, comprenant des moyens pour sélectionner (504) les périodes de temps données pour des dispositifs (118, 120, 122), groupes de dispositifs ou cellules pour les deux directions de transmission.

11. Appareil (106) selon la revendication 5, comprenant des moyens pour sélectionner (504) un nombre donné différent pour différents dispositifs (118, 120, 122), groupes de dispositifs ou cellules utilisant le même canal partagé.

12. Procédé de communication comprenant :
la communication (412) sur un canal partagé synchronisé ayant une structure de trames comprenant des symboles, et
la réception (414) en provenance d'un élément de réseau d'un nombre donné pour chaque trame ou sous-trame,
la mesure (416), durant le nombre donné de périodes de symbole au début d'une trame ou sous-trame, d'une interférence et la prise de décision d'émettre ou non durant le reste des périodes de symbole de la trame ou sous-trame sur la base de ladite mesure.

13. Procédé selon la revendication 12, comprenant en outre :
la réception (414) en provenance d'un élément de réseau d'un numéro donné pour un nombre déterminé de trames ou sous-trames successives.

14. Procédé selon la revendication 12, comprenant en outre :
la communication (412) sur un canal partagé ayant une structure de trames comprenant un nombre prédéterminé de sous-trames à l'intérieur de chaque trame, et
la réception (414) en provenance d'un élément de réseau d'un numéro donné pour chaque sous-trame de la trame.

15. Procédé selon la revendication 12, comprenant en outre :
la réception (414) en provenance d'un élément de réseau des nombres donnés pour différentes directions de transmission.

16. Procédé de communication comprenant :
la commande (402) d'un ensemble de dispositifs, groupes de dispositifs ou cellules configurés pour utiliser un canal partagé synchronisé en communication, le canal ayant une structure de trames comprenant des symboles et la mesure, durant un nombre donné de périodes de symbole au début d'une trame ou sous-trame, d'un interférence et la prise de décision d'émettre ou non durant le reste des périodes de symbole de la trame ou sous-trame sur la base de ladite mesure (s), et
la sélection (404) d'un nombre donné pour chaque trame ou sous-trame pour des dispositifs, groupes de dispositifs ou cellules utilisant le même canal partagé.

17. Procédé selon la revendication 16, comprenant en outre :
la sélection (404) d'un nombre donné pour un nombre prédéterminé de trames ou sous-trames successives pour des dispositifs (118, 120, 122), groupes de dispositifs ou cellules utilisant le même canal partagé.

18. Procédé selon la revendication 16 comprenant en outre :
la sélection (404) de la période de temps donnée pour des dispositifs, groupes de dispositifs ou cellules sur la base de l'information de localisation concernant les dispositifs (118, 120, 122), groupes de dispositifs ou cellules.

19. Procédé selon la revendication 16 comprenant en outre :
la sélection (404) de la période de temps donnée pour des dispositifs, groupes de dispositifs ou cellules sur la base d'une information de mesure de l'affaiblissement de trajet concernant les dispositifs (118, 120, 122), groupes de dispositifs ou cellules.

20. Procédé selon la revendication 16, comprenant en outre :
la sélection (404) de la période de temps donnée pour des dispositifs, groupes de dispositifs ou cellules sur la base de l'information relative à la qualité de service concernant les dispositifs (118 , 120, 122), groupes de dispositifs ou cellules ou la capacité de transmission requise par les dispositifs, groupes de dispositifs ou cellules.

21. Procédé selon la revendication 16, comprenant en outre :
la sélection (404) des périodes de temps données pour des dispositifs (118, 120, 122), groupes de dispositifs ou cellules pour les deux directions de transmission.

22. Produit programme d'ordinateur codé sur un support de distribution lisible par ordinateur et comprenant des instructions de programme qui exécutent le procédé suivant une quelconque des revendications 12 à 21, lorsqu'elles sont chargées dans un appareil.
